# EUROPEAN PATENT APPLICATION

(11) **EP 4 837 772 A1**
(43) Date of publication of application: **11.11.2026**
(21) Application number: 24915168.9
(22) Date of filing: 26.12.2024
(51) Int. Cl.: B60L 15/32

(54) **VEHICLE ESCAPE METHOD AND APPARATUS, AND ELECTRONIC DEVICE AND STORAGE MEDIUM**

(30) Priority: 02.01.2024 CN 202410004988
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Yizhe, Ningbo, Zhejiang 315899 (CN)
(74) Representative: Boult Wade Tennant LLP
(86) International application number: PCT/CN2024/142641
(87) International publication number: WO 2025/145953

(57) **Abstract**

A method for vehicle extrication is disclosed. The method includes: receiving an extrication mode activation signal, and switching a vehicle driving mode from a normal mode to an extrication mode; acquiring, in the extrication mode, an alternating drive frequency of a front motor assembly and a rear motor assembly; acquiring a current pressure value of each air spring collected by the air suspension; calculating and obtaining a current natural frequency of the air suspension, a drive power corresponding to the front motor assembly, and a drive power corresponding to the rear motor assembly based on the pressure value of each air spring; controlling the air suspension to vibrate up and down according to the current natural frequency of the air suspension; and based on the alternating drive frequency, alternately driving the front motor assembly and the rear motor assembly according to respective drive powers corresponding to the front motor assembly and the rear motor assembly, until an extrication mode exit signal is received. Then, a vehicle exits the extrication mode and switches to the normal mode. The method enables the vehicle extrication to be quickly achieved in muddy road conditions, and reliability of the vehicle is improved. It also discloses an apparatus for vehicle extrication, an electronic device, and a storage medium using this method.

## Description

The present application claims priority to Chinese patent application No. 2024100049882, filed to China National Intellectual Property Administration on January 2, 2024 and entitled "METHOD AND APPARATUS FOR VEHICLE EXTRICATION, ELECTRONIC DEVICE AND STORAGE MEDIUM", which is hereby incorporated by reference in its entirety.

### TECHNICAL FIELD

The present application relates to, but is not limited to, vehicle control technologies, and in particular, to a method for vehicle extrication, an apparatus for vehicle extrication, an electronic device, and a storage medium.

### BACKGROUND

With the development of the vehicle industry, the vehicles are increasingly widely employed in production and daily life, which brings great convenience to people's transportation. During rainy weather, when travelling on muddy rural roads, vehicles easily get stuck on the muddy roads, and wheel slip happens.

In practical applications, due to a driver's skill level and driving experience, it is impossible to achieve the success vehicle extrication, and may even worsen a situation, thereby further increasing the difficulty of vehicle extrication.

Therefore, how to enable the vehicle extrication to be quickly achieved in muddy road conditions and improve reliability of the vehicle has become an urgent problem to be solved.

### SUMMARY

The following is a summary of the subject matter described in detail herein. This summary is not intended to limit the protection scope of the claims.

The objective of the present application is to provide a method for vehicle extrication, an apparatus for vehicle extrication, an electronic device, and a storage medium, to improve a situation where the vehicle extrication cannot be quickly achieved in muddy road conditions.

In a first aspect, the present application provides a method for vehicle extrication, applied to a four-motor drive system, where the four-motor drive system includes a front motor assembly, a rear motor assembly, and an air suspension; the air suspension includes an air spring provided corresponding to each wheel; where the method includes: receiving an extrication mode activation signal, and switching a vehicle driving mode from a normal mode to an extrication mode; acquiring, in the extrication mode, an alternating drive frequency of the front motor assembly and the rear motor assembly; acquiring a current pressure value of each air spring collected by the air suspension; calculating and obtaining a current natural frequency of the air suspension based on the pressure value of each air spring; calculating and obtaining, based on the pressure value of each air spring, a drive power corresponding to the front motor assembly and a drive power corresponding to the rear motor assembly; controlling the air suspension to vibrate up and down according to the current natural frequency of the air suspension; and alternately driving, based on the alternating drive frequency, the front motor assembly and the rear motor assembly according to respective drive powers corresponding to the front motor assembly and the rear motor assembly, until an extrication mode exit signal is received, exiting the extrication mode and switching to the normal mode.

In some possible implementations, the alternately driving, based on the alternating drive frequency, the front motor assembly and the rear motor assembly according to respective drive powers corresponding to the front motor assembly and the rear motor assembly includes: based on the alternating drive frequency, alternately sending a first drive command and a second drive command to the front motor assembly and the rear motor assembly respectively, so that the front motor assembly operates in response to the first drive command, and the rear motor assembly operates in response to the second drive command; where the first drive command includes the drive power corresponding to the front motor assembly, and the second drive command includes the drive power corresponding to the rear motor assembly.

In some possible implementations, the method further includes: in the extrication mode, based on the alternating drive frequency, determining an alternation cycle between the front motor assembly and the rear motor assembly; when the alternation cycle arrives, collecting a front wheel-side speed and a rear wheel-side speed of a vehicle, and based on the front wheel-side speed and the rear wheel-side speed of the vehicle, calculating a slip ratio of the vehicle; when the slip ratio of the vehicle is less than a preset threshold, and the extrication mode exit signal is received, exiting the extrication mode and switching to the normal mode; when the slip ratio of the vehicle is not less than the preset threshold, not exiting the extrication mode.

In some possible implementations, the calculating and obtaining, based on the pressure value of each air spring, the current drive power corresponding to the front motor assembly and the current drive power corresponding to the rear motor assembly includes: based on the pressure value of each air spring, calculating a current center of mass position of the vehicle; based on the current center of mass position of the vehicle, calculating and obtaining a current power distribution ratio corresponding to the front motor assembly and the rear motor assembly; determining a current total drive power of the vehicle, and based on the current power distribution ratio corresponding to the front motor assembly and the rear motor assembly, calculating and obtaining the current drive power corresponding to the front motor assembly and the current drive power corresponding to the rear motor assembly.

In some possible implementations, the calculating and obtaining the current natural frequency of the air suspension based on the pressure value of each air spring includes: acquiring a stiffness coefficient of each air spring; for each air spring, according to a spring vibration frequency formula, calculating and obtaining the vibration frequency corresponding to the air spring based on the pressure value of the air spring and the stiffness coefficient of the air spring; calculating an average value of vibration frequencies corresponding to all air springs, and the average value is served as the current natural frequency of the air suspension.

In a second aspect, the present application provides an apparatus for vehicle extrication, applied to a four-motor drive system, where the four-motor drive system includes a front motor assembly, a rear motor assembly, and an air suspension; the air suspension includes an air spring provided corresponding to each wheel; where the apparatus includes: a receiving module, configured to receive an extrication mode activation signal, and switch a vehicle driving mode from a normal mode to an extrication mode; a first acquiring module, configured to acquire, in the extrication mode, an alternating drive frequency of the front motor assembly and the rear motor assembly; a second acquiring module, configured to acquire a current pressure value of each air spring collected by the air suspension; a first calculating module, configured to calculate and obtain, based on the pressure value of each air spring, a current natural frequency of the air suspension; a second calculating module, configured to calculate and obtain a drive power corresponding to the front motor assembly and a drive power corresponding to the rear motor assembly based on the pressure value of each air spring; a controlling module, configured to control the air suspension to vibrate up and down according to the current natural frequency of the air suspension; a drive module, configured to, based on the alternating drive frequency, alternately drive the front motor assembly and the rear motor assembly according to respective drive powers corresponding to the front motor assembly and the rear motor assembly, until an extrication mode exit signal is received, exit the extrication mode and switch to the normal mode.

In some possible implementations, the drive module is specifically configured to: based on the alternating drive frequency, alternately send a first drive command and a second drive command to the front motor assembly and the rear motor assembly respectively, so that the front motor assembly operates in response to the first drive command, and the rear motor assembly operates in response to the second drive command; where the first drive command includes the drive power corresponding to the front motor assembly, and the second drive command includes the drive power corresponding to the rear motor assembly.

In some possible implementations, the apparatus further includes: a determining module, configured to, in the extrication mode, based on the alternating drive frequency, determine an alternation cycle between the front motor assembly and the rear motor assembly; a collecting module, configured to, when the alternation cycle arrives, collect a front wheel-side speed and a rear wheel-side speed of a vehicle; a third calculating module, configured to, based on the front wheel-side speed and the rear wheel-side speed of the vehicle, calculate a slip ratio of the vehicle; a processing module, configured to, when the slip ratio of the vehicle is less than a preset threshold, and the extrication mode exit signal is received, exit the extrication mode and switch to the normal mode; when the slip ratio of the vehicle is not less than the preset threshold, not exit the extrication mode.

In some possible implementations, the second calculating module is specifically configured to: based on the pressure value of each air spring, calculate a current center of mass position of the vehicle; based on the current center of mass position of the vehicle, calculate and obtain a current power distribution ratio corresponding to the front motor assembly and the rear motor assembly; determine a current total drive power of the vehicle, and based on the current power distribution ratio corresponding to the front motor assembly and the rear motor assembly, calculate and obtain the current drive power corresponding to the front motor assembly and the current drive power corresponding to the rear motor assembly.

In some possible implementations, the first calculating module is specifically configured to: acquire a stiffness coefficient of each air spring; for each air spring, according to a spring vibration frequency formula, calculate and obtain the vibration frequency corresponding to the air spring based on the pressure value of the air spring and a stiffness coefficient of the air spring; calculate an average value of vibration frequencies corresponding to all air springs, and the average value is served as the current natural frequency of the air suspension.

In a third aspect, the present application provides an electronic device, including: a processor, and a memory communicatively connected to the processor; the memory is stored with a computer-executable instruction; the processor executes the computer-executable instruction stored in the memory to implement the method as described above.

In a fourth aspect, the present application provides a computer-readable storage medium, where the computer-readable storage medium is stored with a computer-executable instruction, and the computer-executable instruction, when executed by a processor, is configured to implement the method as described above.

In a fifth aspect, the present application provides a computer program product, including a computer program, where the computer program, when executed, implements the method as described above.

In a sixth aspect, the present application provides a computer program, where the computer program, when run on a computer, causes the computer to execute the method as described above.

In the method for the vehicle extrication, the apparatus for the vehicle extrication, the electronic device, and the storage medium provided by the present application, the extrication mode activation signal is received, and the vehicle driving mode is switched from the normal mode to the extrication mode; the alternating drive frequency of the front motor assembly and the rear motor assembly in the extrication mode is acquired; the current pressure value of each air spring collected by the air suspension is acquired; the current natural frequency of the air suspension, the drive power corresponding to the front motor assembly, and the drive power corresponding to the rear motor assembly are calculated and obtained based on the pressure value of each air spring; the air suspension is controlled to vibrate up and down according to the current natural frequency of the air suspension; and based on the alternating drive frequency, the front motor assembly and the rear motor assembly are alternately driven according to the respective drive powers corresponding to the front motor assembly and the rear motor assembly, until the extrication mode exit signal is received, the extrication mode is exited and it is switched to the normal mode. In the solution of the present application, based on the pressure value of each air spring, the current natural frequency of the air suspension, the drive power corresponding to the front motor assembly, and the drive power corresponding to the rear motor assembly are calculated and obtained; where each control spring is provided corresponding to each wheel, and based on pressure values of all air springs, a tilt degree of the vehicle and a depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. The air suspension is controlled to vibrate up and down according to the current natural frequency of the air suspension, and a maximized inertial force oscillation is generated through resonance, which allows the vehicle to obtain oscillating dynamic load. Based on the alternating drive frequency, the front motor assembly and the rear motor assembly are alternately driven according to respective drive powers corresponding to the front motor assembly and the rear motor assembly, a maximum extrication capability can be obtained under the repeatedly alternating drive characteristics, thereby enabling the vehicle extrication to be quickly achieved and improving reliability of the vehicle.

### BRIEF DESCRIPTION OF DRAWINGS

The drawings herein are incorporated into and form a part of the specification, illustrate embodiments consistent with the present application, and are used together with the specification to explain the principles of the present application.
FIG. 1 is a schematic flowchart of a method for vehicle extrication provided in Embodiment 1 of the present application.
FIG. 2 is another schematic flowchart of a method for vehicle extrication provided in Embodiment 1 of the present application.
FIG. 3 is a schematic flowchart of a method for vehicle extrication provided in Embodiment 2 of the present application.
FIG. 4 is a structural schematic diagram of an apparatus for vehicle extrication provided in Embodiment 3 of the present application.
FIG. 5 is a schematic diagram of an architecture for a four-motor drive system provided in Embodiment 3 of the present application.
FIG. 6 is a structural schematic diagram of an electronic device provided in Embodiment 4 of the present application.

Through the above drawings, specific embodiments of the present application have been shown, which will be described in more detail later. These drawings and text descriptions are not intended to limit the scope of the technical concept of the present application in any way, but to explain concepts of the present application to those skilled in the art by referring to specific embodiments.

### DESCRIPTION OF EMBODIMENTS

Exemplary embodiments will be described in detail here, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the present application. Rather, they are merely examples of apparatuses and methods consistent with some aspects of the present application as detailed in the appended claims.

It should be noted that, the brief description of terms in the present application is only for understanding the implementations described below, and is not intended to limit the implementations of the present application. Unless otherwise stated, these terms should be understood in their ordinary and general meanings.

The terms "first", "second", etc. in the specification and claims of the present application and the above drawings are used to distinguish similar or similar type of objects or entities, and do not necessarily imply a specific order or sequence, unless otherwise indicated (Unless otherwise indicated). It should be understood that the terms used in this way may be interchangeable under appropriate circumstances, for example, can be implemented in an order other than those illustrated or described in the embodiments of the present application.

In addition, the terms "including" and "having" and any variations thereof are intended to cover non-exclusive inclusion. For example, a product or a device that includes a series of components is not necessarily limited to those components clearly listed, but may include other components that are not clearly listed or are inherent to these products or devices. The term "module" as used in the present application refers to any known or later developed hardware, software, firmware, artificial intelligence, fuzzy logic, or a combination of hardware and/or software code that is capable of performing the functions associated with that element.

With the development of the vehicle industry, the vehicles are increasingly widely employed in production and daily life, which provides great convenience for people's transportation. When encountering rainy weather, vehicles traveling on muddy rural roads easily get stuck in the muddy roads, and wheel slip happens.

In practical applications, due to a driver's skill level and driving experience, it is impossible to achieve the success vehicle extrication, and may even worsen the situation, thereby further increasing the difficulty of the vehicle extrication. For example, after a vehicle is stuck in a muddy road, the driver, according to a habitual instinct, depresses the accelerator pedal to raise a wheel speed in an attempt to achieve the vehicle extrication. Such operation often causes the wheels to rotate too fast, thereby ejecting the ground attachments (mud, sand, etc.) that originally supported the wheel load and provided friction, and this potentially causes the wheels to sink deeper. At the same time, more mud and sand may adhere to gaps of the wheels themselves, which reduces the friction coefficient and instead exacerbates the difficulty of vehicle extrication.

The technical content provided by the present application aims to address the above technical problems in an optional manner.

In the embodiments of the present application, based on a pressure value of each air spring, a current natural frequency of the air suspension, a current drive power corresponding to a front motor assembly, and a current drive power corresponding to a rear motor assembly are calculated and obtained; where each control spring is provided corresponding to each wheel, and based on pressure values of all air springs, a tilt degree of a vehicle and a depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. The air suspension is controlled to vibrate up and down according to the current natural frequency of the air suspension, and a maximized inertial force oscillation is generated through resonance, which allows the vehicle to obtain oscillating dynamic load. Based on an alternating drive frequency, the front motor assembly and the rear motor assembly are alternately driven according to respective drive powers corresponding to the front motor assembly and the rear motor assembly, a maximum extrication capability can be obtained under the repeatedly alternating drive characteristics, thereby enabling the vehicle extrication to be quickly achieved and improving reliability of the vehicle.

The technical solutions of the present application will be described in detail below with specific embodiments. The following specific embodiments may be combined with each other, and for the same or similar concepts or processes, they may not be repeated in some embodiments. In the description of the present application, unless otherwise explicitly specified and defined, each term should be understood broadly in the field. The embodiments of the present application will be described below with reference to the accompanying drawings.

### Embodiment 1

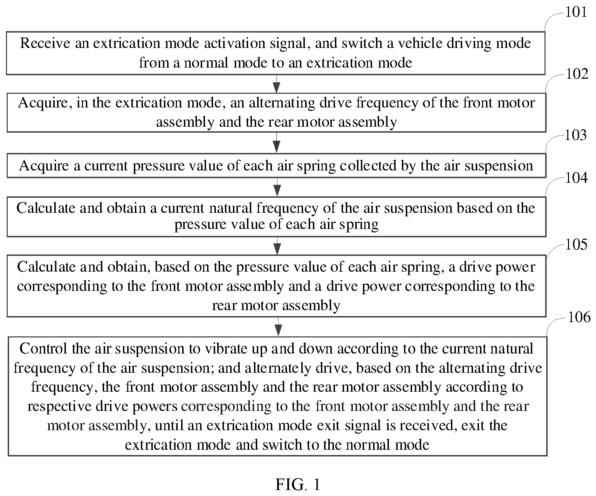

FIG. 1 is a schematic flowchart of a method for vehicle extrication provided in Embodiment 1 of the present application. It is applied to a four-motor drive system, where the four-motor drive system includes a front motor assembly, a rear motor assembly, and an air suspension. The air suspension includes an air spring provided corresponding to each wheel. As shown in FIG. 1, the method includes the following steps.

Step 101: Receive an extrication mode activation signal, and switch a vehicle driving mode from a normal mode to an extrication mode.

Step 102: Acquire, in the extrication mode, an alternating drive frequency of the front motor assembly and the rear motor assembly.

Step 103: Acquire a current pressure value of each air spring collected by the air suspension.

Step 104: Calculate and obtain a current natural frequency of the air suspension based on the pressure value of each air spring.

Step 105: Calculate and obtain, based on the pressure value of each air spring, a drive power corresponding to the front motor assembly and a drive power corresponding to the rear motor assembly.

Step 106: Control the air suspension to vibrate up and down according to the current natural frequency of the air suspension; and alternately drive, based on the alternating drive frequency, the front motor assembly and the rear motor assembly according to respective drive powers corresponding to the front motor assembly and the rear motor assembly, until an extrication mode exit signal is received, exit the extrication mode and switch to the normal mode.

In practical applications, the execution body of the method for vehicle extrication can be an apparatus for vehicle extrication. The implementation of the apparatus for vehicle extrication can be in various forms, for example, it can be implemented by a computer program, such as application software, etc.; or, such as, a chip, etc. It can also be implemented as a medium storing the relevant computer program, such as a USB flash drive, a cloud drive, etc.; or, it can also be implemented by a physical apparatus integrated or installed with the relevant computer program, for example a server, etc.

The extrication mode activation signal is a condition for switching the vehicle driving mode. After receiving the extrication mode exit signal, the vehicle driving mode is switched from the normal mode to the extrication mode. In an example, an extrication mode button can be provided in the vehicle. When the vehicle is stuck in mud under muddy road conditions, a driver can press the extrication mode button in an early stage of the predicament to send the extrication mode activation signal to the apparatus for vehicle extrication, and the vehicle driving mode is switched from the normal mode to the extrication mode.

In the present embodiment, a differential control method for the front motor assembly and the rear motor assembly is adopted to drive the front motor assembly and the rear motor assembly to operate alternately to output a reverse torque, so that the vehicle has driving force in front and rear directions. The air suspension is controlled to vibrate up and down according to the current natural frequency of the air suspension, a maximized inertial force oscillation is generated through resonance, which allows the vehicle to obtain oscillating dynamic load, and a maximum extrication capability can be obtained under the repeatedly alternating drive characteristics.

In practical applications, the alternating drive frequency can be adjusted according to an actual situation. For example, if the road is relatively smooth under the current road conditions and it is difficult for the vehicle extrication(s), a larger alternating drive frequency can be set, alternately operation between the front motor assembly and the rear motor assembly is more frequently, which can better facilitate the vehicle extrication(s). Optionally, the alternating drive frequency can gradually decrease as the vehicle extrication process. Specifically, at the beginning of the extrication mode, when the vehicle is greater stuck in the mud, and a larger alternating drive frequency is needed to facilitate the vehicle extrication; after a period of time, when the vehicle is less stuck in the mud, and the alternating drive frequency can be reduced to facilitate the vehicle extrication; until the vehicle extrication is achieved, the driver releases the extrication mode button, the extrication mode exit signal is sent to the apparatus for the vehicle extrication, and the vehicle exits the extrication mode and switches to the normal mode.

In practical applications, there are many situations where a vehicle gets stuck in the mud, for example, the entire vehicle is stuck in the mud, a depth the vehicle being stuck in mud is large, or the depth the vehicle being stuck in mud is small. In the present embodiment, the air suspension includes air springs provided corresponding to each wheel. Based on the current pressure value of each air spring, the current tilt degree of the vehicle and the current depth it is stuck in the muddy road can be determined, that is, the current pressure value of each air spring can accurately reflect the current situation of the vehicle.

On this basis, the current natural frequency of the air suspension, the current drive power corresponding to the front motor assembly, and the current drive power corresponding to the rear motor assembly calculated based on the current pressure value of each air spring can be more suitable for the current situation of the vehicle. Specifically, the natural frequency of the air suspension is calculated and obtained based on the pressure value of each air spring. The natural frequency of the air suspension conforms to the current situation of the vehicle and can be a frequency that enables the vehicle to generate resonance. The air suspension is controlled to vibrate up and down according to the current natural frequency of the air suspension, and the maximized inertial force oscillation can be generated, which allows the vehicle to obtain oscillating dynamic load. Specifically, after determining the current total drive power of the vehicle, the current drive power corresponding to the front motor assembly and the current drive power corresponding to the rear motor assembly are allocated according to the pressure value of each air spring, that is, the current drive power corresponding to the front motor assembly and the current drive power corresponding to the rear motor assembly are reasonably allocated according to the actual situation of the vehicle, which can more accurately facilitate the vehicle extrication.

It is understandable that the air suspension is controlled to vibrate up and down according to the current natural frequency of the air suspension, the maximized inertial force oscillation is generated through resonance, the vehicle is enabled to obtain oscillating dynamic load; and based on the alternating drive frequency, the front motor assembly and the rear motor assembly are alternately driven according to the respective drive powers corresponding to the front motor assembly and the rear motor assembly, the maximum extrication capability can be obtained under the repeatedly alternating drive characteristics, thereby enabling the vehicle scape to be quickly achieved and improving reliability of the vehicle.

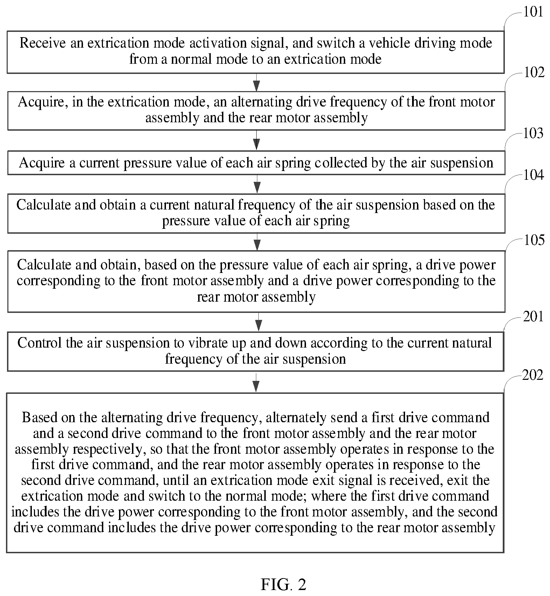

Optionally, operating of the front motor assembly and the rear motor assembly can be achieved by sending drive commands to the front motor assembly and the rear motor assembly based on the alternating drive frequency. In a possible implementation, FIG. 2 is another schematic flowchart of a method for vehicle extrication provided in Embodiment 1 of the present application. As shown in FIG. 2, based on the above figure, the above step 106 includes the following.

Step 201: Control the air suspension to vibrate up and down according to the current natural frequency of the air suspension.

Step 202: Based on the alternating drive frequency, alternately send a first drive command and a second drive command to the front motor assembly and the rear motor assembly respectively, so that the front motor assembly operates in response to the first drive command, and the rear motor assembly operates in response to the second drive command, until an extrication mode exit signal is received, exit the extrication mode and switch to the normal mode; where the first drive command includes the drive power corresponding to the front motor assembly, and the second drive command includes the drive power corresponding to the rear motor assembly.

In combination with the above example, the current drive power corresponding to the front motor assembly and the current drive power corresponding to the rear motor assembly are allocated according to the current pressure value of each air spring. In practice, the current drive power corresponding to the front motor assembly and the current drive power corresponding to the rear motor assembly are updated in real time according to the current pressure value of each air spring. Where, the first drive command is used to drive the front motor assembly to operate, and the first drive command includes the drive power corresponding to the front motor assembly. The second drive command is used to drive the rear motor assembly to operate, and the second drive command includes the drive power corresponding to the rear motor assembly.

In practical applications, an alternation cycle between the front motor assembly and the rear motor assembly can be determined according to the alternating drive frequency. Specifically, when the alternation cycle for the front motor assembly arrives, the first drive command is sent to the front motor assembly. After the front motor assembly receives the first drive command, it acquires the current drive power corresponding to the front motor assembly, and in response to the first drive command, the front motor assembly operates according to the current drive power corresponding to the front motor assembly. Correspondingly, when the alternation cycle for the rear motor assembly arrives, the second drive command is sent to the rear motor assembly. After the rear motor assembly receives the second drive command, it acquires the current drive power corresponding to the rear motor assembly, and in response to the second drive command, the rear motor assembly operates according to the current drive power corresponding to the rear motor assembly.

In the present implementation, based on the pressure value of each air spring, the current natural frequency of the air suspension, the current drive power corresponding to the front motor assembly, and the current drive power corresponding to the rear motor assembly are calculated and obtained; where each control spring is provided corresponding to each wheel, and based on the pressure values of all air springs, the tilt degree of the vehicle and the depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. The air suspension is controlled to vibrate up and down according to the current natural frequency of the air suspension, and the maximized inertial force oscillation is generated through resonance, which allows the vehicle to obtain oscillating dynamic load. Based on the alternating drive frequency, the first drive command and the second drive command are alternately sent to the front motor assembly and the rear motor assembly respectively, so that the front motor assembly operates according to the current drive power corresponding to the front motor assembly in response to the first drive command, and the rear motor assembly operates according to the current drive power corresponding to the rear motor assembly in response to the second drive command. The maximum extrication capability can be obtained under the repeatedly alternating drive characteristics, thereby enabling the vehicle extrication to be quickly achieved and improving reliability of the vehicle.

Optionally, regarding a determination method for the vehicle extrication(s), in a possible implementation, the method further includes the following.

In the extrication mode, based on the alternating drive frequency, determine an alternation cycle between the front motor assembly and the rear motor assembly.

When the alternation cycle arrives, collect a front wheel-side speed and a rear wheel-side speed of the vehicle; and based on the front wheel-side speed and the rear wheel-side speed of the vehicle, calculate a slip ratio of the vehicle.

When the slip ratio of the vehicle is less than a preset threshold, and the extrication mode exit signal is received, exit the extrication mode and switch to the normal mode; when the slip ratio of the vehicle is not less than the preset threshold, do not exit the extrication mode.

The slip ratio is also known as a sliding ratio. The slip ratio refers to a proportion of a sliding component in wheel movement, which can be represented by *S*. For example, a calculation formula for the slip ratio *S* can be expressed as: $S = \frac{u - {u}_{W}}{u} \times 100 % = \frac{u - r ω}{u} \times 100 %$

In the above formula, *u* is a vehicle speed, *u_{W}* is a wheel speed, *ω* is a wheel rolling angular velocity, *r* is a wheel radius. When the wheel is rolling, *u_{W}* = *u*, *S*=0; when the wheel is locked in pure sliding, *u_{W}* = 0, *S*=100%; when the wheel is both rolling and sliding, *u > u_{W}*, 0<*S*<100%. It means that the larger the slip ratio of the wheel, the greater the proportion of the sliding component in the wheel movement.

In the present implementation, the slip ratio of the vehicle can be an average value of slip ratios of all wheels. Specifically, when the alternation cycle arrives, the front wheel-side speed and the rear wheel-side speed of the vehicle are collected, the slip ratio of each wheel is calculated, and the slip ratio of the vehicle is calculated based on the slip ratio of each wheel. Optionally, after the slip ratio of each wheel is obtained, the largest slip ratio among them is taken as the slip ratio of the vehicle.

It is understandable that when the slip ratio of the vehicle is less than a preset threshold, it means that the current proportion of the sliding component in the vehicle movement is small, which indicates that the current vehicle has been escaped. The driver releases the extrication mode button to achieve exiting the extrication mode and switching to the normal mode. When the slip ratio of the vehicle is not less than the preset threshold, it means that the current proportion of the sliding component in the vehicle movement is large, which indicates that the current vehicle has not yet been escaped. The driver has not released the extrication mode button, so the extrication mode is not exited. In practical applications, when the slip ratio of the vehicle is not less than the preset threshold, and the driver has not released the extrication mode button, the extrication mode is not exited, and the motor assembly corresponding to the current alternation cycle is driven to operate.

In the present implementation, each time the alternation cycle arrives, it is determined whether the vehicle currently needs to exit the extrication mode based on the slip ratio of the vehicle. If the vehicle has not exited the extrication mode, then the motor assembly corresponding to that alternation cycle is driven to operate, which can more accurately control the vehicle extrication(s) and improve the accuracy of vehicle control.

Optionally, in a possible implementation, the above step 105 includes the following.

Based on the pressure value of each air spring, calculate a current center of mass position of the vehicle.

Based on the current center of mass position of the vehicle, calculate and obtain a current power distribution ratio corresponding to the front motor assembly and the rear motor assembly.

Determine a current total drive power of the vehicle, and based on the current power distribution ratio corresponding to the front motor assembly and the rear motor assembly, calculate and obtain the current drive power corresponding to the front motor assembly and the current drive power corresponding to the rear motor assembly.

The center of mass refers to an imaginary point in a material system where the mass is considered to be concentrated. The current center of mass position of the vehicle is a position where the current mass of the vehicle is concentrated. In practical applications, each air spring is provided corresponding to a wheel, therefore, the pressure value of each air spring can be approximately equal to wheel load corresponding to that air spring.

Specifically, the center of mass (CoM) position of the vehicle is divided into: a lateral CoM position, a longitudinal CoM position, and a CoM height position. In the present implementation, a calculation method for the lateral CoM position is not limited. For example, for a vehicle with equal wheelbases at front and rear axles, the calculation formula for the lateral CoM position can be expressed as: ${B}_{1} = \frac{B \times {Z}_{2}}{m \times g} , {B}_{2} = \frac{B \times {Z}_{1}}{m \times g}$ where, *B*₁ and *B*₂ are distances from the lateral CoM position to centers of the left wheel and the right wheel respectively; *B* is a distance from the left wheel to the right wheel; *Z*₁ and *Z*₂ are total loads on the left and right wheels respectively (i.e., a sum of pressure values of air springs corresponding to the front and rear wheels on the left side and a sum of pressure values of air springs corresponding to the front and rear wheels on the right side), *m* is curb mass, *g* is the gravitational acceleration.

In the present implementation, a calculation method for the longitudinal CoM position is not limited. For example, the calculation formula for the longitudinal CoM position can be expressed as: $a = \frac{L \times {Z}_{r}}{m \times g} = L \frac{{m}_{2}}{m} , a = \frac{L \times {Z}_{f}}{m \times g} = L \frac{{m}_{1}}{m}$ where, *a* and *b* are distances from the vehicle CoM to the front and rear axles respectively, *L* is the vehicle wheelbase, *Zᵣ* and *Z_{f}* are front axle load and rear axle load respectively (i.e., a sum of pressure values of air springs corresponding to the left and right wheels on the front side and a sum of pressure values of air springs corresponding to the left and right wheels on the rear side); *m*₁ and *m*₂ are front and rear axle load masses respectively, *m* is the curb mass.

In the present implementation, a calculation method for the CoM height position is not limited, and the CoM height position can be calculated by a moment balance method, a swing method, and a roll method. For example, the CoM height position *h_{g}* is calculated by the moment balance method, and the calculation formula can be expressed as: ${h}_{g} = r + \frac{\left(L\left({Z}_{f}^{′}-{Z}_{f}\right)\right)}{mg tan β}$ where, *r* is a static radius of the tire, *L* is the vehicle wheelbase, *β* is a corresponding lifting angle of the vehicle; *Z_{f}* is the front axle load when the vehicle is placed flat (i.e., a sum of pressure values of air springs corresponding to the left and right wheels on the front side when the vehicle is placed flat), ${Z}_{f}^{′}$ is the front axle load after the rear axle is lifted (i.e., a sum of pressure values of air springs corresponding to the left and right wheels on the front side when the rear wheels of the vehicle are lifted), *m* is the curb mass, *g* is the gravitational acceleration.

It is understandable that based on the pressure value of each air spring, the current center of mass position of the vehicle is calculated, which can determine the tilt degree of the vehicle and the depth it is stuck in the muddy road. Therefore, the current power distribution ratio corresponding to the front motor assembly and the rear motor assembly is calculated based on the current center of mass position of the vehicle, thereby achieving reasonable distribution of the total drive power of the vehicle, and the vehicle extrication(s) can be quickly achieved.

Specifically, after determining the current total drive power of the vehicle, a product of the total drive power and the power distribution ratio corresponding to the front motor assembly is calculated to obtain the drive power corresponding to the front motor assembly; a product of the total drive power and the power distribution ratio corresponding to the rear motor assembly is calculated to obtain the drive power corresponding to the rear motor assembly.

In the present implementation, based on the pressure value of each air spring, the current natural frequency of the air suspension is calculated and obtained; based on the pressure value of each control spring, the current center of mass position of the vehicle is calculated, and based on the current center of mass position of the vehicle, the drive power corresponding to the front motor assembly and the drive power corresponding to the rear motor assembly are calculated and obtained; where each control spring is provided corresponding to each wheel, and based on the pressure values of all air springs, the tilt degree of the vehicle and the depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. The air suspension is controlled to vibrate up and down according to the current natural frequency of the air suspension, and the maximized inertial force oscillation is generated through resonance, which allows the vehicle to obtain oscillating dynamic load. Based on the alternating drive frequency, the front motor assembly and the rear motor assembly are alternately driven according to the respective drive powers corresponding to the front motor assembly and the rear motor assembly. The maximum extrication capability can be obtained under the repeatedly alternating drive characteristics, thereby enabling the vehicle extrication to be quickly achieved and improving reliability of the vehicle.

Optionally, in a possible implementation, the above step 104 includes the following.

Acquire a stiffness coefficient of each air spring.

For each air spring, according to a spring vibration frequency formula, calculate and obtain the vibration frequency corresponding to the air spring based on the pressure value of the air spring and the stiffness coefficient of the air spring.

Calculate an average value of vibration frequencies corresponding to all air springs, and the average value is served as the current natural frequency of the air suspension.

The stiffness coefficient *k* is also known as an elastic coefficient. The stiffness coefficient of the air spring characterizes the elastic force generated per unit deformation of the air spring. For example, spring vibration frequency *pᵢ* corresponding to air spring *i* is: ${p}_{i} = \frac{1}{2 π} \sqrt{\frac{{k}_{i}}{{m}_{i}}}$ specifically, *kᵢ* is the stiffness coefficient of air spring *i*, *mᵢ* is the wheel load mass corresponding to air spring *i* (i.e., a ratio of the pressure value of air spring *i* and the gravitational acceleration *g*).

In the present implementation, vibration frequencies corresponding to all air springs are comprehensively considered to calculate and obtain the current natural frequency of the air suspension. Specifically, after calculating and obtaining the vibration frequencies corresponding to all air springs, the average value of the vibration frequencies corresponding to all air springs is calculated, and the average value is taken as the current natural frequency of the air suspension. Controlling the air suspension to vibrate up and down according to the current natural frequency of the air suspension can generate the maximized inertial force oscillation through resonance, which allows the vehicle to obtain oscillating dynamic load.

In the method for the vehicle extrication provided in the present embodiment, the extrication mode activation signal is received, and the vehicle driving mode is switched from the normal mode to the extrication mode; the alternating drive frequency of the front motor assembly and the rear motor assembly in the extrication mode is acquired; the current pressure value of each air spring collected by the air suspension is acquired; the current natural frequency of the air suspension, the current drive power corresponding to the front motor assembly, and the current drive power corresponding to the rear motor assembly are calculated and obtained based on the pressure value of each air spring; the air suspension is controlled to vibrate up and down according to the current natural frequency of the air suspension; and based on the alternating drive frequency, the front motor assembly and the rear motor assembly are alternately driven according to the respective drive powers corresponding to the front motor assembly and the rear motor assembly, until the extrication mode exit signal is received, the extrication mode is exited and it is switched to the normal mode. In the embodiments of the present application, based on the pressure value of each air spring, the current natural frequency of the air suspension, the drive power corresponding to the front motor assembly, and the drive power corresponding to the rear motor assembly are calculated and obtained; where each control spring is provided corresponding to each wheel, and based on the pressure values of all air springs, the tilt degree of the vehicle and the depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. Controlling the air suspension to vibrate up and down according to the current natural frequency of the air suspension generates the maximized inertial force oscillation through resonance, which allows the vehicle to obtain oscillating dynamic load. Based on the alternating drive frequency, the front motor assembly and the rear motor assembly are alternately driven according to the respective drive powers corresponding to the front motor assembly and the rear motor assembly, the maximum extrication capability can be obtained under the repeatedly alternating drive characteristics, thereby enabling the vehicle extrication to be quickly achieved and improving reliability of the vehicle.

### Embodiment 2

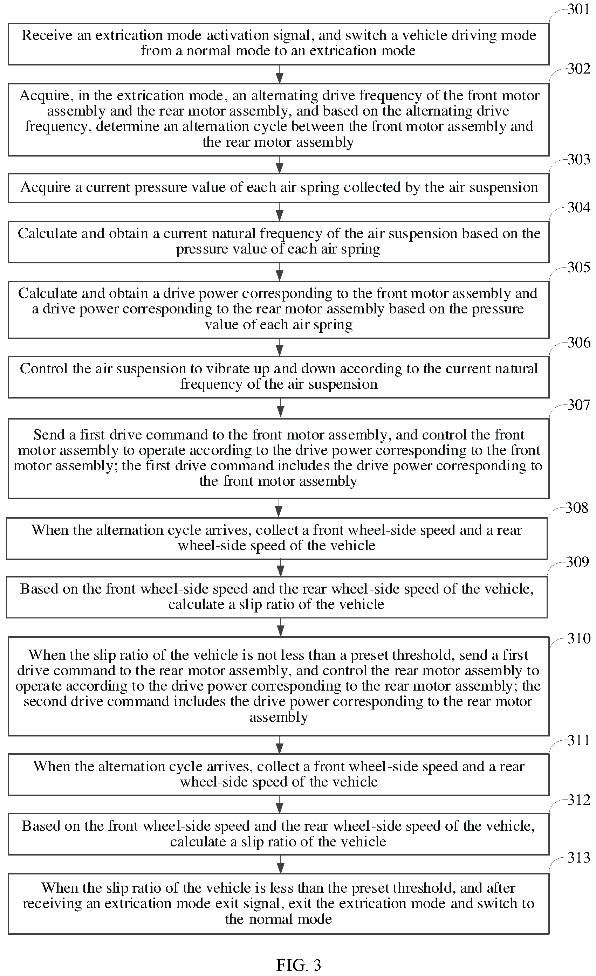

FIG. 3 is a schematic flowchart of a method for vehicle extrication provided in Embodiment 2 of the present application. The method for the vehicle extrication is described by taking one front motor assembly drive and one rear motor assembly drive to achieve the vehicle extrication as an example. As shown in FIG. 3, the method includes the following steps.

Step 301: Receive an extrication mode activation signal, and switch a vehicle driving mode from a normal mode to an extrication mode.

Step 302: Acquire, in the extrication mode, an alternating drive frequency of the front motor assembly and the rear motor assembly, and based on the alternating drive frequency, determine an alternation cycle between the front motor assembly and the rear motor assembly.

Step 303: Acquire a current pressure value of each air spring collected by the air suspension.

Step 304: Calculate and obtain a current natural frequency of the air suspension based on the pressure value of each air spring.

Step 305: Calculate and obtain a drive power corresponding to the front motor assembly and a drive power corresponding to the rear motor assembly based on the pressure value of each air spring.

Step 306: Control the air suspension to vibrate up and down according to the current natural frequency of the air suspension.

Step 307: Send a first drive command to the front motor assembly, and control the front motor assembly to operate according to the drive power corresponding to the front motor assembly; the first drive command includes the drive power corresponding to the front motor assembly.

Step 308: When the alternation cycle arrives, collect a front wheel-side speed and a rear wheel-side speed of the vehicle.

Step 309: Based on the front wheel-side speed and the rear wheel-side speed of the vehicle, calculate a slip ratio of the vehicle.

Step 310: When the slip ratio of the vehicle is not less than a preset threshold, send a first drive command to the rear motor assembly, and control the rear motor assembly to operate according to the drive power corresponding to the rear motor assembly; the second drive command includes the drive power corresponding to the rear motor assembly.

Step 311: When the alternation cycle arrives, collect a front wheel-side speed and a rear wheel-side speed of the vehicle.

Step 312: Based on the front wheel-side speed and the rear wheel-side speed of the vehicle, calculate a slip ratio of the vehicle.

Step 313: When the slip ratio of the vehicle is less than the preset threshold, and after receiving an extrication mode exit signal, exit the extrication mode and switch to the normal mode.

In the method for the vehicle extrication provided in the present embodiment, the extrication mode activation signal is received, and the vehicle driving mode is switched from the normal mode to the extrication mode; the alternating drive frequency of the front motor assembly and the rear motor assembly in the extrication mode is acquired; the current pressure value of each air spring collected by the air suspension is acquired; the current natural frequency of the air suspension, the current drive power corresponding to the front motor assembly, and the current drive power corresponding to the rear motor assembly are calculated and obtained based on the pressure value of each air spring; the air suspension is controlled to vibrate up and down according to the current natural frequency of the air suspension; and based on the alternating drive frequency, the front motor assembly and the rear motor assembly are alternately driven according to the respective drive powers corresponding to the front motor assembly and the rear motor assembly, until the extrication mode exit signal is received, the extrication mode is exited and it is switched to the normal mode. In the embodiments of the present application, based on the pressure value of each air spring, the current natural frequency of the air suspension, the current drive power corresponding to the front motor assembly, and the current drive power corresponding to the rear motor assembly are calculated and obtained; where each control spring is provided corresponding to each wheel, and based on the pressure values of all air springs, the tilt degree of the vehicle and the depth it is stuck in the muddy road can be determined. Therefore, the current natural frequency of the air suspension, the drive power corresponding to the front motor assembly, and the drive power corresponding to the rear motor assembly are suitable for the current situation of the vehicle. Controlling the air suspension to vibrate up and down according to the current natural frequency of the air suspension generates the maximized inertial force oscillation through resonance, which allows the vehicle to obtain oscillating dynamic load. Based on the alternating drive frequency, the front motor assembly and the rear motor assembly are alternately driven according to the respective drive powers corresponding to the front motor assembly and the rear motor assembly, the maximum extrication capability can be obtained under the repeatedly alternating drive characteristics, thereby enabling the vehicle extrication to be quickly achieved and improving reliability of the vehicle.

### Embodiment 3

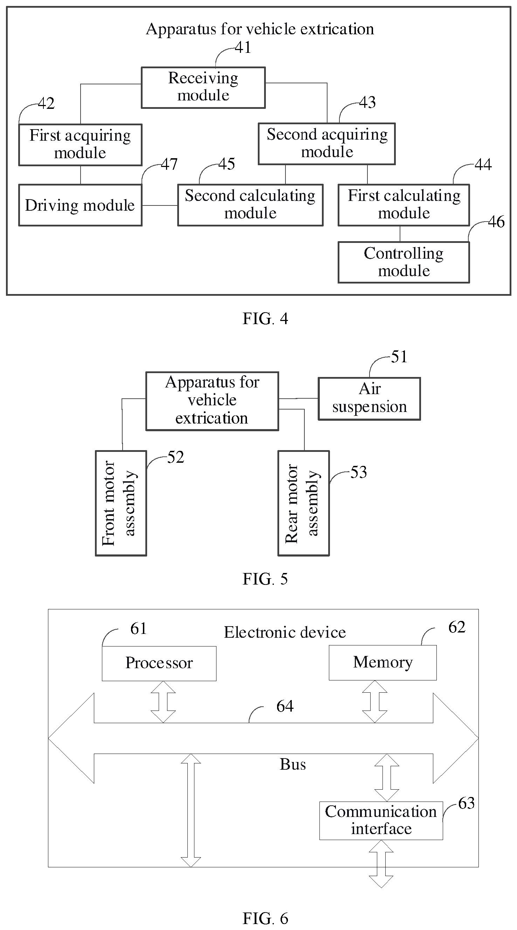

FIG. 4 is a structural schematic diagram of an apparatus for vehicle extrication provided in Embodiment 3 of the present application. It is applied to a four-motor drive system, where the four-motor drive system includes a front motor assembly, a rear motor assembly, and an air suspension; the air suspension includes an air spring provided corresponding to each wheel. As shown in FIG. 4, the apparatus includes the following.

A receiving module 41, configured to receive an extrication mode activation signal, and switch a vehicle driving mode from a normal mode to an extrication mode.

A first acquiring module 42, configured to acquire, in the extrication mode, an alternating drive frequency of the front motor assembly and the rear motor assembly.

A second acquiring module 43, configured to acquire a current pressure value of each air spring collected by the air suspension.

A first calculating module 44, configured to calculate and obtain, based on the pressure value of each air spring, a current natural frequency of the air suspension.

A second calculating module 45, configured to calculate and obtain a drive power corresponding to the front motor assembly and a drive power corresponding to the rear motor assembly based on the pressure value of each air spring.

A controlling module 46, configured to control the air suspension to vibrate up and down according to the current natural frequency of the air suspension.

A drive module 47, configured to, based on the alternating drive frequency, alternately drive the front motor assembly and the rear motor assembly according to respective drive powers corresponding to the front motor assembly and the rear motor assembly, until an extrication mode exit signal is received, exit the extrication mode and switch to the normal mode.

The extrication mode activation signal is a condition for switching the vehicle driving mode. After the receiving module 41 receives the mode signal, the vehicle driving mode is switched from the normal mode to the extrication mode. In an example, an extrication mode button can be provided in the vehicle. When the vehicle is stuck in the mud under muddy road conditions, a driver can press the extrication mode button in an early stage of the predicament, so as to receive the extrication mode activation signal, so as to send the extrication mode activation signal to the apparatus for vehicle extrication, and the vehicle driving mode is switched from the normal mode to the extrication mode.

In the present embodiment, a differential control method for the front motor assembly and the rear motor assembly is adopted. The driving module 47 drives the front motor assembly and the rear motor assembly to operate alternately to output a reverse torque, so that the vehicle has driving forces in front and rear directions; and the controlling module 46 controls the air suspension to vibrate up and down according to the current natural frequency of the air suspension, thereby generating maximized inertial force oscillation through resonance, which allows the vehicle to obtain oscillating dynamic load, thus the maximum extrication capability can be obtained under the repeatedly alternating drive characteristics.

In practical applications, the alternating drive frequency can be adjusted according to an actual situation. For example, if the road is relatively smooth under the current road conditions, and it is difficult for the vehicle extrication(s), a larger alternating drive frequency can be set, alternately operation between the front motor assembly and the rear motor assembly is more frequently, which can better facilitate the vehicle extrication(s). Optionally, the alternating drive frequency can gradually decrease as the vehicle extrication process. Specifically, at the beginning of the extrication mode, when the vehicle is greater stuck in the mud, and a larger alternating drive frequency is needed to facilitate the vehicle extrication(s); after a period of time, when the vehicle is less stuck in the mud, and the alternating drive frequency can be reduced to facilitate the vehicle extrication(s); until the vehicle extrication(s) is achieved, the driver releases the pressed extrication mode button, the extrication mode exit signal is sent to the apparatus for vehicle extrication, the extrication mode is exited and it is switched to the normal mode.

In practical applications, there are many situations where a vehicle gets stuck in the mud, for example, the entire vehicle is stuck in the mud, a depth the vehicle being stuck in mud is large, or the depth the vehicle being stuck in mud is small. In the present embodiment, the air suspension includes air springs provided corresponding to each wheel. Based on the current pressure value of each air spring, the current tilt degree of the vehicle and the depth it is stuck in the muddy road can be determined, that is, the current pressure value of each air spring can accurately reflect the current situation of the vehicle.

On this basis, the current natural frequency of the air suspension, the drive power corresponding to the front motor assembly, and the drive power corresponding to the rear motor assembly calculated by the first calculating module 44 and the second calculating module 45 based on the current pressure value of each air spring can be more suitable for the current situation of the vehicle. Specifically, the natural frequency of the air suspension is calculated based on the pressure value of each air spring. The natural frequency of the air suspension conforms to the current situation of the vehicle and can be a frequency that enables the vehicle to generate resonance. The air suspension is controlled to vibrate up and down according to the current natural frequency of the air suspension, and the maximized inertial force oscillation can be generated, which allows the vehicle to obtain oscillating dynamic load. Specifically, after determining the current total drive power of the vehicle, the current drive power corresponding to the front motor assembly and the current drive power corresponding to the rear motor assembly are allocated according to the pressure value of each air spring, that is, the current drive power corresponding to the front motor assembly and the current drive power corresponding to the rear motor assembly are reasonably allocated according to the actual situation of the vehicle, which can more accurately facilitate the vehicle extrication(s).

It is understandable that the controlling module 46 controls the air suspension to vibrate up and down according to the current natural frequency of the air suspension, and generates the maximized inertial force oscillation through resonance, which allows the vehicle to obtain oscillating dynamic load. The driving module 47, based on the alternating drive frequency, alternately drives the front motor assembly and the rear motor assembly according to the respective drive powers corresponding to the front motor assembly and the rear motor assembly, the maximum extrication capability can be obtained under the repeatedly alternating drive characteristics, thereby enabling the vehicle extrication to be quickly achieved and improving reliability of the vehicle.

Optionally, in a possible implementation, the above driving module 47 is specifically configured to:
Based on the alternating drive frequency, alternately send a first drive command and a second drive command to the front motor assembly and the rear motor assembly respectively, so that the front motor assembly operates in response to the first drive command, and the rear motor assembly operates in response to the second drive command, until an extrication mode exit signal is received, exit the extrication mode and switch to the normal mode; where the first drive command includes the drive power corresponding to the front motor assembly, and the second drive command includes the drive power corresponding to the rear motor assembly.

In combination with the above example, the current drive power corresponding to the front motor assembly and the current drive power corresponding to the rear motor assembly are allocated according to the current pressure value of each air spring. In practice, the current drive power corresponding to the front motor assembly and the current drive power corresponding to the rear motor assembly are updated in real time according to the current pressure value of each air spring. Where, the first drive command is used to drive the front motor assembly to operate, and the first drive command includes the drive power corresponding to the front motor assembly. The second drive command is used to drive the rear motor assembly to operate, and the second drive command includes the drive power corresponding to the rear motor assembly.

In practical applications, an alternation cycle between the front motor assembly and the rear motor assembly can be determined according to the alternating drive frequency. Specifically, when the alternation cycle for the front motor assembly arrives, the driving module 47 sends the first drive command to the front motor assembly. After the front motor assembly receives the first drive command, it acquires the current drive power corresponding to the front motor assembly, and in response to the first drive command, the front motor assembly operates according to the current drive power corresponding to the front motor assembly. Correspondingly, when the alternation cycle for the rear motor assembly arrives, the driving module 47 sends the second drive command to the rear motor assembly. After the rear motor assembly receives the second drive command, it acquires the current drive power corresponding to the rear motor assembly, and in response to the second drive command, the rear motor assembly operates according to the current drive power corresponding to the rear motor assembly.

In the present implementation, the first calculating module 44 and the second calculating module 45, based on the pressure value of each air spring, calculate and obtain the current natural frequency of the air suspension, the drive power corresponding to the front motor assembly, and the drive power corresponding to the rear motor assembly; where each control spring is provided corresponding to each wheel, and based on the pressure values of all air springs, the tilt degree of the vehicle and the depth it is stuck in the muddy road can be determined. Therefore, the current natural frequency of the air suspension, the drive power corresponding to the front motor assembly, and the drive power corresponding to the rear motor assembly are suitable for the current situation of the vehicle. The controlling module 46 controls the air suspension to vibrate up and down according to the current natural frequency of the air suspension, generates the maximized inertial force oscillation through resonance, which allows the vehicle to obtain oscillating dynamic load. The driving module 47, based on the alternating drive frequency, alternately sends the first drive command and the second drive command to the front motor assembly and the rear motor assembly respectively, so that the front motor assembly operates according to the current drive power corresponding to the front motor assembly in response to the first drive command, and the rear motor assembly operates according to the current drive power corresponding to the rear motor assembly in response to the second drive command. The maximum extrication capability can be obtained under the repeatedly alternating drive characteristics, thereby enabling the vehicle extrication to be quickly achieved and improving reliability of the vehicle.

Optionally, in a possible implementation, the apparatus further includes the following.

A determining module, configured to, in the extrication mode, based on the alternating drive frequency, determine an alternation cycle between the front motor assembly and the rear motor assembly.

A collecting module, configured to, when the alternation cycle arrives, collect a front wheel-side speed and a rear wheel-side speed of the vehicle.

A third calculating module, configured to, based on the front wheel-side speed and the rear wheel-side speed of the vehicle, calculate a slip ratio of the vehicle.

A processing module, configured to, when the slip ratio of the vehicle is less than a preset threshold, and the extrication mode exit signal is received, exit the extrication mode and switch to the normal mode; when the slip ratio of the vehicle is not less than the preset threshold, do not exit the extrication mode.

The slip ratio is also known as the sliding ratio. The slip ratio refers to a proportion of a sliding component in wheel movement, which can be represented by *S*. For example, the calculation formula for the slip ratio *S* can be expressed as: $S = \frac{u - {u}_{W}}{u} \times 100 % = \frac{u - r ω}{u} \times 100 %$

In the above formula, *u* is a vehicle speed, *u_{W}* is a wheel speed, *ω* is a wheel rolling angular velocity, *r* is a wheel radius. When the wheel is rolling, *u_{W}* = *u*, *S*=0; when the wheel is locked in pure sliding, *u_{W}* = 0, *S*=100%; when the wheel is both rolling and sliding, *u > u_{W}*, 0<*S*<100%. It means that the larger the slip ratio of the wheel, the greater the proportion of the sliding component in the wheel movement.

In the present implementation, the slip ratio of the vehicle can be an average value of slip ratios of all wheels. Specifically, when the alternation cycle arrives, the collecting module collects the front wheel-side speed and the rear wheel-side speed of the vehicle; the third calculating module calculates the slip ratio of each wheel, and calculates the slip ratio of the vehicle based on the slip ratio of each wheel. Optionally, after the slip ratio of each wheel is obtained, the largest slip ratio among them is taken as the slip ratio of the vehicle.

It is understandable that when the slip ratio of the vehicle is less than a preset threshold, it means that the current proportion of the sliding component in the vehicle movement is small, which indicates that the current vehicle has been escaped. The driver releases the extrication mode button to achieve exiting the extrication mode and switching to the normal mode. When the slip ratio of the vehicle is not less than the preset threshold, it means that the current proportion of the sliding component in the vehicle movement is large, which indicates that the current vehicle has not yet been escaped. The driver has not released the extrication mode button, so the extrication mode is not exited. In practical applications, when the slip ratio of the vehicle is not less than the preset threshold, and the driver has not released the extrication mode button, the extrication mode is not exited, and the motor assembly corresponding to the current alternation cycle is driven to operate.

In the present implementation, each time the alternation cycle arrives, the processing module determines whether the vehicle currently needs to exit the extrication mode based on the slip ratio of the vehicle. If the vehicle has not exited the extrication mode, then the motor assembly corresponding to that alternation cycle is driven to operate, which can more accurately control the vehicle extrication(s) and improve the accuracy of vehicle control.

Optionally, in a possible implementation, the above second calculating module 45 is specifically configured to:
Based on the pressure value of each air spring, calculate a current center of mass position of the vehicle;
Based on the current center of mass position of the vehicle, calculate and obtain current power distribution ratio corresponding to the front motor assembly and the rear motor assembly;
Determine a current total drive power of the vehicle, and based on the current power distribution ratio corresponding to the front motor assembly and the rear motor assembly, calculate and obtain the current drive power corresponding to the front motor assembly and the current drive power corresponding to the rear motor assembly.

The center of mass refers to an imaginary point in a material system where the mass is considered to be concentrated. The current center of mass position of the vehicle is a position where the current mass of the vehicle is currently concentrated. In practical applications, each air spring is provided corresponding to a wheel, therefore, the pressure value of each air spring can be approximately equal to a wheel load corresponding to that air spring.

Specifically, the center of mass position (CoM) of the vehicle is divided into: a lateral CoM position, a longitudinal CoM position, and a CoM height position. In the present implementation, a calculation method for the lateral CoM position is not limited. For example, for a vehicle with equal wheelbases at front and rear axles, the calculation formula for the lateral CoM position can be expressed as: ${B}_{1} = \frac{B \times {Z}_{2}}{m \times g} , {B}_{2} = \frac{B \times {Z}_{1}}{m \times g}$ where, *B*₁ and *B*₂ are distances from the lateral CoM position to centers of the left wheel and the right wheel respectively; *B* is a distance from the left wheel to the right wheel; *Z*₁ and *Z*₂ are total loads on the left and right wheels respectively (i.e., a sum of pressure values of air springs corresponding to the front and rear wheels on the left side and a sum of pressure values of air springs corresponding to the front and rear wheels on the right side), *m* is curb mass, *g* is the gravitational acceleration.

In the present implementation, a calculation method for the longitudinal CoM position is not limited. For example, the calculation formula for the longitudinal CoM position can be expressed as: $a = \frac{L \times {Z}_{r}}{m \times g} = L \frac{{m}_{2}}{m} , a = \frac{L \times {Z}_{f}}{m \times g} = L \frac{{m}_{1}}{m}$ where, *a* and *b* are distances from the vehicle CoM to the front and rear axles respectively, *L* is the vehicle wheelbase, *Zᵣ* and *Z_{f}* are front axle load and rear axle load respectively (i.e., a sum of pressure values of air springs corresponding to the left and right wheels on the front side and a sum of pressure values of air springs corresponding to the left and right wheels on the rear side); *m*₁ and *m*₂ are front and rear axle load masses respectively, *m* is the curb mass.

In the present implementation, a calculation method for the CoM height position is not limited, and the CoM height position can be calculated by a moment balance method, a swing method, and a roll method. For example, the CoM height position *h_{g}* is calculated by the moment balance method, and the calculation formula can be expressed as: ${h}_{g} = r + \frac{\left(L\left({Z}_{f}^{′}-{Z}_{f}\right)\right)}{mg tan β}$ where, *r* is a static radius of the tire, *L* is the vehicle wheelbase, *β* is a corresponding lifting angle of the vehicle; *Z_{f}* is the front axle load when the vehicle is placed flat (i.e., a sum of pressure values of air springs corresponding to the left and right wheels on the front side when the vehicle is placed flat), ${Z}_{f}^{′}$ is the front axle load after the rear axle is lifted (i.e., a sum of pressure values of air springs corresponding to the left and right wheels on the front side when the rear wheels of the vehicle are lifted), *m* is the curb mass, *g* is the gravitational acceleration.

It is understandable that based on the pressure value of each air spring, the current center of mass position of the vehicle is calculated, which can determine the tilt degree of the vehicle and the depth it is stuck in the muddy road. Therefore, the current power distribution ratio corresponding to the front motor assembly and the rear motor assembly is calculated based on the current center of mass position of the vehicle, thereby achieving reasonable distribution of the total drive power of the vehicle, and the vehicle extrication(s) can be quickly achieved.

Specifically, after determining the current total drive power of the vehicle, a product of the total drive power and the power distribution ratio corresponding to the front motor assembly is calculated to obtain the drive power corresponding to the front motor assembly; a product of the total drive power and the power distribution ratio corresponding to the rear motor assembly is calculated to obtain the drive power corresponding to the rear motor assembly.

In the present implementation, the first calculating module 44, based on the pressure value of each air spring, calculates and obtains the current natural frequency of the air suspension; the second calculating module 45, based on the pressure value of each control spring, calculates the current center of mass position of the vehicle, and based on the current center of mass position of the vehicle, calculates and obtains the drive power corresponding to the front motor assembly and the drive power corresponding to the rear motor assembly; where each control spring is provided corresponding to each wheel, and based on the pressure values of all air springs, the tilt degree of the vehicle and the depth it is stuck in the muddy road can be determined. Therefore, the current natural frequency of the air suspension, the current drive power corresponding to the front motor assembly, and the current drive power corresponding to the rear motor assembly are suitable for the current situation of the vehicle. The controlling module 46 controls the air suspension to vibrate up and down according to the current natural frequency of the air suspension, and generates maximized inertial force oscillation through resonance, which allows the vehicle to obtain oscillating dynamic load. The driving module 47, based on the alternating drive frequency, alternately drives the front motor assembly and the rear motor assembly according to the respective drive powers corresponding to the front motor assembly and the rear motor assembly. The maximum extrication capability can be obtained under the repeatedly alternating drive characteristics, thereby enabling the vehicle extrication to be quickly achieved and improving reliability of the vehicle.

Optionally, in a possible implementation, the above first calculating module 44 is specifically configured to:
Acquire a stiffness coefficient of each air spring;
For each air spring, according to a spring vibration frequency formula, calculate and obtain the vibration frequency corresponding to the air spring based on the pressure value of the air spring and the stiffness coefficient of the air spring;
Calculate an average value of vibration frequencies corresponding to all air springs, and the average value is served as the current natural frequency of the air suspension.

The stiffness coefficient *k* is also known as an elastic coefficient. The stiffness coefficient of the air spring characterizes the elastic force generated per unit deformation of the air spring. For example, spring vibration frequency *pᵢ* corresponding to air spring *i* is: ${p}_{i} = \frac{1}{2 π} \sqrt{\frac{{k}_{i}}{{m}_{i}}}$ specifically, *kᵢ* is the stiffness coefficient of air spring *i*, *mᵢ* is the wheel load mass corresponding to air spring *i* (i.e., a ratio of the pressure value of air spring *i* and the gravitational acceleration *g*).

In the present implementation, the first calculating module 44 comprehensively considers vibration frequencies corresponding to all air springs to calculate and obtain the current natural frequency of the air suspension. Specifically, after the first calculating module 44 calculates and obtains the vibration frequencies corresponding to all air springs, it calculates the average value of the vibration frequencies corresponding to all air springs, and takes the average value as the current natural frequency of the air suspension. The controlling module 46 controls the air suspension to vibrate up and down according to the current natural frequency of the air suspension, generates maximized inertial force oscillation through resonance, thereby allowing the vehicle to obtain oscillating dynamic load.

To better understand the four-motor drive system, a vehicle extrication process is described below in conjunction with FIG. 5. FIG. 5 is a schematic diagram of the architecture of a four-motor drive system provided in Embodiment 3 of the present application. As shown in FIG. 5, the four-motor drive system includes: an air suspension 51, a front motor assembly 52, and a rear motor assembly 53. The vehicle extrication process is described in conjunction with FIG. 5, and the vehicle extrication steps include the following.

Step 1, the apparatus for vehicle extrication receives an extrication mode activation signal, and switches a vehicle driving mode from a normal mode to an extrication mode.

Step 2, the apparatus for vehicle extrication acquires, in the extrication mode, an alternating drive frequency of the front motor assembly 52 and the rear motor assembly 53.

Step 3, the apparatus for vehicle extrication acquires a current pressure value of each air spring collected by the air suspension 51.

Step 4, the apparatus for vehicle extrication calculates and obtains a current natural frequency of the air suspension 51 based on the pressure value of each air spring.

Step 5, the apparatus for vehicle extrication calculates and obtains a drive power corresponding to the front motor assembly 52 and a drive power corresponding to the rear motor assembly 53 based on the pressure value of each air spring.

Step 6, the apparatus for vehicle extrication controls the air suspension 51 to vibrate up and down according to the current natural frequency of the air suspension 51.

Step 7, the apparatus for vehicle extrication, based on the alternating drive frequency, alternately drives the front motor assembly 52 and the rear motor assembly 53 according to respective drive powers corresponding to the front motor assembly 52 and the rear motor assembly 53, until an extrication mode exit signal is received, exits the extrication mode and switches to the normal mode.

In the apparatus for vehicle extrication provided in the present embodiment, the receiving module receives the extrication mode activation signal, and the vehicle driving mode is switched from the normal mode to the extrication mode; the first acquiring module acquires the alternating drive frequency of the front motor assembly and the rear motor assembly in the extrication mode; the second acquiring module acquires the current pressure value of each air spring collected by the air suspension; the first calculating module and the second calculating module calculate and obtain the current natural frequency of the air suspension, the current drive power corresponding to the front motor assembly, and the current drive power corresponding to the rear motor assembly based on the pressure value of each air spring; the controlling module controls the air suspension to vibrate up and down according to the current natural frequency of the air suspension; and the driving module, based on the alternating drive frequency, alternately drives the front motor assembly and the rear motor assembly according to the respective drive powers corresponding to the front motor assembly and the rear motor assembly, until the extrication mode exit signal is received, the extrication mode is exited and it is switched to the normal mode. In the embodiments of this application, the first calculating module and the second calculating module, based on the pressure value of each air spring, calculate and obtain the current natural frequency of the air suspension, the drive power corresponding to the front motor assembly, and the drive power corresponding to the rear motor assembly; where each control spring is provided corresponding to each wheel, and based on the pressure values of all air springs, the tilt degree of the vehicle and the depth it is stuck in the muddy road can be determined. Therefore, the current natural frequency of the air suspension, the drive power corresponding to the front motor assembly, and the drive power corresponding to the rear motor assembly are suitable for the current situation of the vehicle. The controlling module controls the air suspension to vibrate up and down according to the current natural frequency of the air suspension, generates maximized inertial force oscillation through resonance, thereby allowing the vehicle to obtain oscillating dynamic load. The driving module, based on the alternating drive frequency, alternately drives the front motor assembly and the rear motor assembly according to the respective drive powers corresponding to the front motor assembly and the rear motor assembly. The maximum extrication capability can be obtained under the repeatedly alternating drive characteristics, thereby enabling the vehicle extrication to be quickly achieved and improving reliability of the vehicle.

### Embodiment 4

FIG. 6 is a structural schematic diagram of an electronic device provided in Embodiment 4 of the present application. As shown in FIG. 6, the electronic device includes:
A processor (processor) 61. A main control apparatus further includes a memory (memory) 62; and may also include a communication interface (Communication Interface) 63 and a bus 64. Where, the processor 61, the memory 62, and the communication interface 63 can communicate with each other through the bus 64. The communication interface 63 can be used for information transmission. The processor 61 can call logic instructions in the memory 62 to execute the method of the above embodiments.

Furthermore, the logic instructions in the above memory 62 can be implemented in a form of software functional units and sold or used as independent products, and can be stored in a computer-readable storage medium.

The memory 62, as a computer-readable storage medium, can be used to store software programs, computer-executable programs, such as program instructions/modules corresponding to the method in the embodiments of the present application. The processor 61 performs functional applications and data processing by running the software programs, the instructions, and the modules stored in the memory 62, that is, the method in the above method embodiments is implemented.

The memory 62 may include a storage program area and a storage data area, where the storage program area may store an operating system, application programs required for at least one function; and the storage data area may store data created according to the use of the terminal device, etc. In addition, the memory 62 may include a high-speed random access memory, and may also include a non-volatile memory.

The embodiment of the present application also provides a computer-readable storage medium. The computer-readable storage medium stores computer-executable instructions, and the computer-executable instructions, when executed by a processor, are used to implement the method in any one of the embodiments. For example, the computer-readable storage medium may be a ROM, a random access memory (RAM), a CD-ROM, a magnetic tape, a floppy disk, an optical data storage device, etc.

The embodiment of the present application also provides a computer program product, including computer programs, which, when executed, implement the method steps in the above method embodiments. The specific implementations and technical effects are similar and will not be repeated here.

The embodiment of the present application also provides a computer program, which, when run on a computer, causes the computer to execute the method steps in the above method embodiments. The specific implementations and technical effects are similar and will not be repeated here.

Those skilled in the art, upon considering the specification and practicing the invention disclosed herein, will readily conceive of other implementations of the present application. The present application is intended to cover any variations, uses, or adaptive changes of the present application. These variations, uses, or adaptive changes follow general principles of the present application and include common general knowledge or conventional technical means in the technical field not disclosed in the present application. The specification and the embodiments are only considered as exemplary, and the true scope and spirit of the present application are pointed out by the following claims.

It should be understood that the present application is not limited to the precise structure that has been described above and shown in the drawings, and various modifications and changes can be made without departing from its scope. The scope of the present application is limited only by the appended claims.

Other aspects will be apparent upon reading and understanding the drawings and the detailed description.

## Claims

1. A method for vehicle extrication, applied to a four-motor drive system, wherein the four-motor drive system comprises a front motor assembly, a rear motor assembly, and an air suspension; the air suspension comprises an air spring provided corresponding to each wheel; wherein the method comprises:
receiving an extrication mode activation signal, and switching a vehicle driving mode from a normal mode to an extrication mode; acquiring, in the extrication mode, an alternating drive frequency of the front motor assembly and the rear motor assembly;
acquiring a current pressure value of each air spring collected by the air suspension; calculating and obtaining a current natural frequency of the air suspension based on the pressure value of each air spring; calculating and obtaining, based on the pressure value of each air spring, a drive power corresponding to the front motor assembly and a drive power corresponding to the rear motor assembly;
controlling the air suspension to vibrate up and down according to the current natural frequency of the air suspension; and alternately driving, based on the alternating drive frequency, the front motor assembly and the rear motor assembly according to respective drive powers corresponding to the front motor assembly and the rear motor assembly, until an extrication mode exit signal is received, exiting the extrication mode and switching to the normal mode.

2. The method according to claim 1, wherein the alternately driving, based on the alternating drive frequency, the front motor assembly and the rear motor assembly according to the respective drive powers corresponding to the front motor assembly and the rear motor assembly comprises:
based on the alternating drive frequency, alternately sending a first drive command and a second drive command to the front motor assembly and the rear motor assembly respectively, so that the front motor assembly operates in response to the first drive command, and the rear motor assembly operates in response to the second drive command; wherein the first drive command comprises the drive power corresponding to the front motor assembly, and the second drive command comprises the drive power corresponding to the rear motor assembly.

3. The method according to claim 2, wherein the method further comprises:
in the extrication mode, based on the alternating drive frequency, determining an alternation cycle between the front motor assembly and the rear motor assembly;
when the alternation cycle arrives, collecting a front wheel-side speed and a rear wheel-side speed of a vehicle; and based on the front wheel-side speed and the rear wheel-side speed of the vehicle, calculating a slip ratio of the vehicle;
when the slip ratio of the vehicle is less than a preset threshold, and the extrication mode exit signal is received, exiting the extrication mode and switching to the normal mode; when the slip ratio of the vehicle is not less than the preset threshold, not exiting the extrication mode.

4. The method according to any one of claims 1 to 3, wherein the calculating and obtaining, based on the pressure value of each air spring, the current drive power corresponding to the front motor assembly and the current drive power corresponding to the rear motor assembly comprises:
based on the pressure value of each air spring, calculating a current center of mass position of the vehicle;
based on the current center of mass position of the vehicle, calculating and obtaining a current power distribution ratio corresponding to the front motor assembly and the rear motor assembly;
determining a current total drive power of the vehicle, and based on the current power distribution ratio corresponding to the front motor assembly and the rear motor assembly, calculating and obtaining the current drive power corresponding to the front motor assembly and the current drive power corresponding to the rear motor assembly.

5. The method according to any one of claims 1 to 3, wherein the calculating and obtaining the current natural frequency of the air suspension based on the pressure value of each air spring comprises:
acquiring a stiffness coefficient of each air spring;
for each air spring, according to a spring vibration frequency formula, calculating and obtaining the vibration frequency corresponding to the air spring based on the pressure value of the air spring and the stiffness coefficient of the air spring;
calculating an average value of vibration frequencies corresponding to all air springs, and the average value is served as the current natural frequency of the air suspension.

6. An apparatus for vehicle extrication, applied to a four-motor drive system, wherein the four-motor drive system comprises a front motor assembly, a rear motor assembly, and an air suspension; the air suspension comprises an air spring provided corresponding to each wheel; wherein the apparatus comprises:
a receiving module, configured to receive an extrication mode activation signal, and switch a vehicle driving mode from a normal mode to an extrication mode;
a first acquiring module, configured to acquire, in the extrication mode, an alternating drive frequency of the front motor assembly and the rear motor assembly;
a second acquiring module, configured to acquire a current pressure value of each air spring collected by the air suspension;
a first calculating module, configured to calculate and obtain, based on the pressure value of each air spring, a current natural frequency of the air suspension;
a second calculating module, configured to calculate and obtain a drive power corresponding to the front motor assembly and a drive power corresponding to the rear motor assembly based on the pressure value of each air spring;
a controlling module, configured to control the air suspension to vibrate up and down according to the current natural frequency of the air suspension;
a drive module, configured to, based on the alternating drive frequency, alternately drive the front motor assembly and the rear motor assembly according to respective drive powers corresponding to the front motor assembly and the rear motor assembly, until an extrication mode exit signal is received, exit the extrication mode and switch to the normal mode.

7. The apparatus according to claim 6, wherein the drive module is specifically configured to:
based on the alternating drive frequency, alternately send a first drive command and a second drive command to the front motor assembly and the rear motor assembly respectively, so that the front motor assembly operates in response to the first drive command, and the rear motor assembly operates in response to the second drive command; wherein the first drive command comprises the drive power corresponding to the front motor assembly, and the second drive command comprises the drive power corresponding to the rear motor assembly.

8. The apparatus according to claim 7, wherein the apparatus further comprises:
a determining module, configured to, in the extrication mode, based on the alternating drive frequency, determine an alternation cycle between the front motor assembly and the rear motor assembly;
a collecting module, configured to, when the alternation cycle arrives, collect a front wheel-side speed and a rear wheel-side speed of a vehicle;
a third calculating module, configured to, based on the front wheel-side speed and the rear wheel-side speed of the vehicle, calculate a slip ratio of the vehicle;
a processing module, configured to, when the slip ratio of the vehicle is less than a preset threshold, and the extrication mode exit signal is received, exit the extrication mode and switch to the normal mode; when the slip ratio of the vehicle is not less than the preset threshold, not exit the extrication mode.

9. The apparatus according to any one of claims 6 to 8, the second calculating module is specifically configured to:
based on the pressure value of each air spring, calculate a current center of mass position of the vehicle; based on the current center of mass position of the vehicle, calculate and obtain a current power distribution ratio corresponding to the front motor assembly and the rear motor assembly; determine a current total drive power of the vehicle, and based on the current power distribution ratio corresponding to the front motor assembly and the rear motor assembly, calculate and obtain the current drive power corresponding to the front motor assembly and the current drive power corresponding to the rear motor assembly.

10. The apparatus according to any one of claims 6 to 8, the first calculating module is specifically configured to:
acquire a stiffness coefficient of each air spring; for each air spring, according to a spring vibration frequency formula, calculate and obtain the vibration frequency corresponding to the air spring based on the pressure value of the air spring and a stiffness coefficient of the air spring; calculate an average value of vibration frequencies corresponding to all air springs, and the average value is served as the current natural frequency of the air suspension.

11. An electronic device, comprising: a processor, and a memory communicatively connected to the processor;
the memory is stored with a computer-executable instruction;
the processor executes the computer-executable instruction stored in the memory to implement the method according to any one of claims 1 to 5.

12. A computer-readable storage medium, wherein the computer-readable storage medium is stored with a computer-executable instruction, and the computer-executable instruction, when executed by a processor, is configured to implement the method according to any one of claims 1 to 5.

13. A computer program product, comprising a computer program, wherein the computer program, when executed, implements the method according to any one of claims 1 to 5.

14. A computer program, wherein the computer program, when run on a computer, causes the computer to execute the method according to any one of claims 1 to 5.
